Europäisches Patentamt

(19) European Patent Office

Office européen des brevets

(11) Publication number : **0 457 742 B1**

(12) **EUROPEAN PATENT SPECIFICATION**

(45) Date of publication of patent specification :
09.03.94 Bulletin 94/10

(51) Int. Cl.<sup>5</sup> : **B60K 23/08**

(21) Application number : **91850119.8**

(22) Date of filing : **10.05.91**

(54) **Method and arrangement for automatic switching on/off of the power transmission of a driving front axle of a tractor or working machine.**

The file contains technical information
submitted after the application was filed and
not included in this specification

(30) Priority : **14.05.90 FI 902397**

(43) Date of publication of application :
**21.11.91 Bulletin 91/47**

(45) Publication of the grant of the patent :
**09.03.94 Bulletin 94/10**

(84) Designated Contracting States :
**DE DK ES FR GB IT SE**

(56) References cited :
**EP-A- 212 721**
**EP-A- 0 295 738**
**EP-A- 0 315 200**
**EP-A- 0 329 045**
**DE-A- 3 636 260**
**DE-U- 8 813 401**

(73) Proprietor : **Valmet Oy**
**Punanotkonkatu 2**
**SF-00130 Helsinki 13 (FI)**

(72) Inventor : **Huuskonen, Pekka**
**Lehdonmutka 4**
**SF-40420 Jyskä (FI)**

(74) Representative : **Wallin, Bo-Göran et al**
**AWAPATENT AB Box 5117**
**S-200 71 Malmö (SE)**

Jouve, 18, rue Saint-Denis, 75001 PARIS

## Description

The invention concerns a method for automatic switching on/off the power transmission of a driving front axle of a tractor in accordance with the preamble of claim 1.

The invention further concerns a control system for automatic switching on/off the power transmission of a driving front axle of a tractor in accordance with the preamble of claim 8.

A method and a system of the kind mentioned in the preambles of claims 1 and 8 are known from EP-A-329 045.

In tractors, in particular in farm tractors, the normal power transmission construction has been arranged so that the power is transmitted from the gearbox to the rear wheels of the tractor through the differential gear permanently. Traditionally, the front axle has not been a driving axle, but in recent years almost all new farm tractors have been provided with a mechanically driving front axle. The driving front axle receives its power conventionally from the gearbox by the intermediate of a cardan shaft. The coupling to the transmission of the front axle is normally arranged by means of a mechanical tooth coupling, by means of a hydraulic multi-disk clutch, or by means of some other, corresponding system.

The transmission of the front axle requires a separate coupling, because, in order that a good steering quality could be maintained, the design speed of the front axle is about 1...3 % higher than the speed of the rear axle. Owing to this difference in speed, in operation on the road, a problem is caused by undue strain on the transmission and by unnecessary wear of the tires if the transmission of the front axle cannot be switched off when it is not needed necessarily. Also, in view of the efficiency of the transmission of the tractor, it is preferable that the transmission of the front axle can be switched off when it is not needed.

A coupling of the front axle which is arranged mechanically by means of a toothed coupling is frequently quite inconvenient in operation, for switching-on of the transmission is very difficult when the tractor does not move and, on the other hand, switching-off of the transmission during driving with power is almost impossible because of the load applied to the system. This is why ever increasing use has been made of a front-axle transmission coupled by means of a hydraulic multi-disk clutch. A hydraulically coupled coupling of the transmission can be controlled by means of an electrically controlled solenoid valve, in which case the operation itself can be controlled simply by means of a press knob or some other, equivalent switch.

Even though the switching on/off of the transmission of the front axle has become easier, the four-wheel drive is, however, frequently in operation even if it were not actually needed for the working. Also, when a farm tractor works in a field, it would be advantageous if the four-wheel drive were switched off when rear-wheel drive alone is adequate, i.e. when the transmission of the front axle is not needed. In operation on the road this is also noticed more readily, but it is often quite difficult for the driver to notice the necessity of four-wheel drive when driving on a field or in corresponding working duties.

The object of the present invention is to provide fully automatic switching on/off of the transmission of the front axle of a tractor so that the operator of the machine does not have to take care of this switching. In view of achieving this, the method in accordance with the invention has the features defined in the characterizing clause of claim 1.

On the other hand, the control system in accordance with the invention has the features defined in the characterizing clause of claim 8.

By means of the invention, a number of remarkable advantages are obtained over the prior-art solutions, of which advantages, e.g., the following should be stated in this connection. The method and the system of the invention keep the transmission of the front axle of the tractor in engagement only when it is necessary thus optimizing the efficiency and the operability of the working machine. Additionally, the solution in accordance with the invention utilizes the transmission of the front axle to a greater extent than would even be possible by means of manual control without automation. The system also protects the multi-disk clutch of the front-wheel drive from excessive strains. Further, in accordance with the invention, the advantage is obtained that during braking with the tractor, a "four-wheel brake" is obtained for the tractor, because the system is programmed so that, on braking, it switches on the four-wheel drive, whereby the grip of the front wheels is utilized by the intermediate of the rear brakes. Normally, of course, the front wheels of a tractor have no brakes at all. Further, on braking, the system prevents locking of the front wheels, whereby, by means of the system, non-locking brakes are obtained for the front wheels of the tractor. The further advantages and characteristic features of the invention will appear from the following detailed description of the invention.

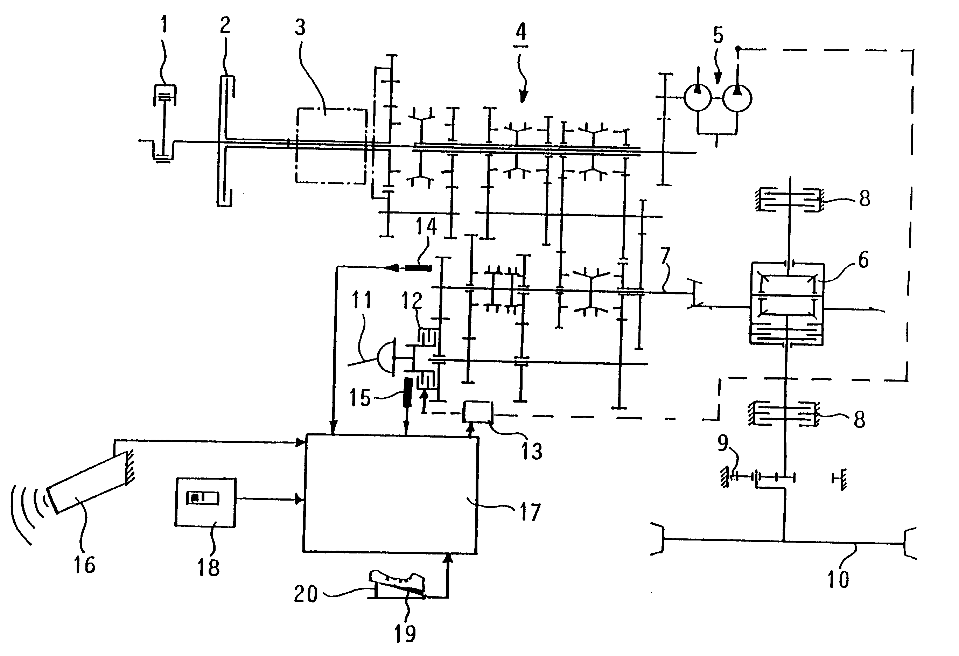

Next, the invention will be described by means of an exemplifying embodiment with reference to the accompanying drawing. The only figure in the drawing is a fully schematic illustration of the power transmission system of a tractor wherein the automatic system in accordance with the invention is employed for switching on/off the transmission of the driving front axle.

In the figure in the drawing, the engine of the tractor is denoted with the reference numeral 1, the driving clutch with the reference numeral 2, and the gearbox generally with the reference numeral 4. Moreover, in the figure, it is indicated by means of the reference numeral 3 and the dashed-dotted line that, between the driving clutch 2 and the gearbox 4, a so-called instant gearbox is provided, which has, as a rule, 2 to 4 different speed ranges. In the figure, the reference numeral 5 denotes a hydraulic pump, which is connected to a shaft which passes through the gearbox 4 and which is connected rigidly to the engine 1 of the tractor and which, thus, always revolves when the engine 1 runs.

From the gearbox 4 the power is transmitted conventionally to the differential gear 6 of the rear axle, through the gear transmission in the gearbox on the drive-wheel shaft 7 of the rear axle. As is shown in the figure in the drawing, in the conventional way, the rear axle is provided with brakes 8 as well as with a hub gear 9, e.g., of the planetary gear type. The figure shows one of the rear wheels 10 only. Further, from the gearbox 4 the power is transmitted conventionally to the drive-wheel shaft 11 of the front axle and from there to the differential gear (not shown) of the front axle. Between the drive-wheel shaft 11 of the front axle and the gearbox 4, a multi-disk clutch 12 is fitted, by whose means the power transmission of the front axle can be switched on when required. The multi-disk clutch 12 of the front axle is a hydraulically operated clutch, which is switched on and off, in accordance with the figure in the drawing, by means of the pressure supplied by the hydraulic pump 5 by the intermediate of a solenoid valve 13.

The automatic arrangement in accordance with the invention for the transmission of the front axle includes a detector system, by whose means the control system in accordance with the invention judges the requirement of four-wheel drive in each particular situation. Firstly, the system includes a speed detector 14, which measures the speed of rotation at the rear axle. In the figure in the drawing, said speed detector 14 for the rear axle is fitted in connection with the gearbox 4 to measure the speed of rotation of the drive-wheel shaft 7 of the rear axle so that the speed range of the gearbox 4 that is used does not affect the measurement result. The speed detector 14 of the rear axle may, however, be fitted in the system at any such point from which it is possible to measure either the speed of rotation of the rear axle directly or a speed of rotation that is proportional to the speed of the rear axle. Thus, the theoretical speed of the tractor is obtained as a measurement result given by the speed detector 14 of the rear axle. Secondly, the system includes a detector 15 that indicates the speed of rotation of the transmission of the front axle, i.e. the speed detector of the front axle. Said speed detector 15 of the front axle is connected to the transmission so that it measures the speed at the front axle irrespective of whether the power transmission of the front axle is engaged or not. Further, the system includes a ground speed detector 16, which indicates the ground speed and is based on microwaves, said detector measuring the factual travel speed of the tractor. Also, a braking detector 20 is connected to the brake pedal 19 of the tractor, said detector indicating when the brake of the tractor is applied.

All of the above detectors 14,15,16 are connected to a central unit 17 of the microprocessor type so that the detectors transmit the signals corresponding to the measurement data to said central unit 17. The solenoid valve 13 that operates the multi-disk clutch 12 of the front axle is also connected to the central unit 17 so that the solenoid valve 13 operates as controlled by the central unit 17. The central unit 17 further includes a device by whose means the operator of the tractor can program the desired operation parameter for the control of the system.

The arrangement in accordance with the invention further includes an operation switch device 18 for the driver, by whose means the mode of operation of the system can be selected. The operation switch device 18 includes switches by whose means it is chosen whether the driver wishes to use a fully manually controlled front-wheel drive or if a fully automatic operation is chosen. Positive control, i.e. manual control of the front-wheel drive, is needed when it is, out of some reason, desirable to force the front-wheel drive on or off irrespective of the automatic system. Thus, the manual-operation switch is an on-off switch, by whose means the front-wheel drive can be selected on or off. Thus, the switches of the operation switch device 18 operate so that by means of one of the switches automatic/manual operation is chosen, whereas the other switch is for manual operation only.

The automatic operation of the system takes place as follows:

For the central unit 17 of the system, the operator programs the operation parameter that acts as the criterion for automatic switching-on of the power transmission for the front axle. This parameter is a simple percentage, which states the difference in speed between the front axle (drive-wheel shaft 11 of the front axle) and the rear axle (drive-wheel shaft 7 of the rear axle) as a percentage. When the power transmission of the front axle is engaged, this percentage is 0, and when the rear wheels 10 revolve while the tractor does not move, this percentage is 100. Front-wheel drive is needed when, during operation, the percentage is higher than 10, in practice 10...40, depending on the driving situation.

When the automatic operation has been switched on, the central unit 17 starts calculating the corresponding actual percentage value and compares said value constantly with the desired reading. The actual value needed by the central unit is obtained by means of the signals given by the speed detectors 14,15 of the front and rear axles out of the following formula:

$$P = \frac{\text{rear} - \text{axle speed} - \text{front} - \text{axle speed}}{\text{rear} - \text{axle speed (7)}} \cdot 100\%$$

The parameter P obtained from the formula given above states when the power transmission of the front axle must be switched on.

In the following, the control algorithm present in the central unit 17 will be described with the aid of an example:

When the tractor starts moving and after the automatic operation has been switched on by means of the operation switch device 18, the control system has switched off the power transmission of the front axle. After this, the multi-disk clutch 12, which operates as the power transmission clutch of the front axle, is switched on as soon as the programmed operation parameter is exceeded, i.e. if the front-axle speed reported by the speed detector 15 of the front axle is by a certain amount lower than the speed reported by the speed detector 14 of the rear axle and if, at the same time, the ground speed reported by the ground-speed detector 16 is not excessively high. In such a case, the sign of the result of calculation is also taken into account, for, e.g., in a braking situation, the difference in speed may also be of opposite sign. In this way the system immediately notices if the slippage of the rear wheels becomes excessively high, in which case the system switches on the transmission of the front axle as an aid. The data on the actual speed of the tractor, provided by the ground-speed detector 16, are needed in order that the central unit 17 could tell whether the tractor is operating, e.g., on the road or on the field. If the actual speed is, for example, higher than 15 km per hour, the tractor is being operated on the road, and in such a case the front-wheel drive is not switched on at all.

Moreover, the system switches on the transmission of the front axle as soon as the brake pedal is pressed if the speed of the front axle is, at the same time, higher than 0 km per hour. The braking detector 20 reports the depressing of the brake pedal 19 to the central unit 17. By means of this switching, the braking is intensified, for normally the front wheels do not have brakes, and when the four-wheel drive is switched on, the grip of the front wheels can be utilized by means of the rear brakes.

The transmission of the front axle is switched off hereafter when the brake pedal 19 is no longer depressed and when the actual speed of the tractor, reported by the ground-speed detector 16, is the same as the speed reported by the speed detector 14 of the rear axle for a sufficiently long time (time constant programmed in the central unit 17) or when the actual speed of the tractor is excessively high (more than 15 km per hour) or when the speed reported by the speed detector 14 of the rear axle is 0 km per hour, in which case the tractor has stopped or the rear wheels have been locked on braking. Further, the system switches off the transmission of the front axle when the ground speed, i.e. the actual speed, of the tractor is lower than a predetermined speed (15 km per hour) during braking when, during depression of the brake pedal 19, the front-wheel drive was not engaged.

With the setting of conditions stated above, it is achieved that the transmission of the front axle is switched off as soon as the actual speed, i.e. the ground speed, of the tractor and the theoretical speed of the rear axle have been the same for a certain time, i.e. in a situation in which the wheels of the tractor do not slip and four-wheel drive is not needed. Further, according to the setting of conditions, if the speed of the tractor is increased beyond the permitted limit, the transmission of the front-wheel drive is switched off. The case is the same if the tractor stops or if, during braking, the speed has become lower than 15 km per hour and the four-wheel drive was not engaged before the braking started. In the contrary case, of course, the automation will switch on the four-wheel drive automatically when the brake pedal 19 is depressed.

Further, the transmission of the front axle is switched off if the brake pedal 19 is depressed while, at the same time, the speed indicated by the speed detector 14 of the rear axle is 0 km per hour and the ground speed is higher than 0 km per hour. This means that, on braking, the wheels of the tractor have been locked and steering of the tractor is impossible if the four-wheel drive is engaged. Now the system notices this and releases the transmission of the front axle as soon as locking occurs. The switching algorithm also immediately notices when the grip of the tires is restored and re-engages the transmission of the front axle. This property is also operative when manual control has been switched on.

The power transmission of the front axle is also switched off when it has been originally switched on and when the difference in speed between the speed reported by the speed detector 15 of the front axle and the speed reported by the speed detector 14 of the rear axle is higher than 0 for a certain time programmed in the central unit 17. By means of this switching, the multi-disk clutch 12 of the front axle is protected from failure, for, if slippage can occur in said clutch 12, it is destroyed very soon. When the coupling of the transmission of the front wheel is disengaged in such a case, the service life of the tractor is improved. The system operates in the same way both during braking and during acceleration. The operation is restored to normal after a certain delay programmed in the central unit.

**Claims**

1. Method for automatic switching on/off the power transmission of a driving front axle of a tractor provided with a power transmission system that includes an engine (1), a driving clutch (2), a gearbox (4), a hydraulic pump (5), a driving rear axle mechanically operated by means of the gearbox (4) and a transmission of the front axle to be coupled by means of a hydraulic coupling (12), said hydraulic coupling comprising a hydraulically operated clutch (12) which is switched on/off by means of the pressure supplied by the hydraulic pump (5) by the intermediate of a solenoid valve (13), as well as a central unit (17), arranged to compare measured data with data preprogrammed in the central unit (17) so that, when the measurement data are in a pre-determined relationship to the pre-programmed limit-value ranges the central unit (17) is arranged to switch on/off the transmission of the front axle automatically, **characterized** in that the rear axle speed, the front-axle speed, and the actual travel speed of the tractor are measured constantly and a braking process is sensed, that the measured values and the point of time of the braking are compared with values and ranges of operation programmed in advance in the central unit (17), and that the power transmission of the front axle is switched off by means of the multi-disk clutch (12) by the intermediate of the solenoid valve (13) if the actual travel speed and the measured rear-axle speed are equal for a pre-determined period of time, unless braking occurs at the same time.

2.  Method as claimed in claim 1, **characterized** in that from the measured axle speeds, the percentage ratio of the difference between the rear-axle speed and the front-axle speed to the measured rear-axle speed is calculated, that the calculated ratio is compared with a pre-programmed range of operation, and that the actual travel speed is compared with a pre-programmed speed value, the power transmission of the front axle being switched on when said percentage ratio exceeds the programmed value or range of operation while the actual travel speed is, at the same time, lower than the programmed value of travel speed.

3.  Method as claimed in claim 2, **characterized** in that the power transmission of the front axle is switched on when said percentage ratio of axle speeds is higher than the preset value and when the actual travel speed is at the maximum equal to the preset value.

4.  Method as claimed in claim 1, **characterized** in that the power transmission of the front axle is switched on during braking if the measured front-axle speed is higher than 0 km per hour.

5.  Method as claimed in any of claims 1 to 3, **char-**

**acterized** in that the power transmission of the front axle is switched off if the actual travel speed is higher than a pre-programmed value of travel speed, unless braking occurs at the same time.

6.  Method as claimed in claim 5, **characterized** in that the power transmission of the front axle is switched off if the actual travel speed is higher than a preset value.

7.  Method as claimed in claim 1 or 4, **characterized** in that the power transmission of the front-axle is switched off on braking if the measured front-axle speed is 0 km per hour and the ground speed is higher than 0 km per hour.

8.  Control system for automatic switching on/off the power transmission of a driving front axle of a tractor provided with a power transmission system that includes an engine (1), a driving clutch (2), a gearbox (4), a hydraulic pump (5), as well as a driving rear axle mechanically operated by means of the gearbox (4) and a transmission of the front axle to be coupled by means of a hydraulic coupling (12), said hydraulic coupling comprising a hydraulically operated clutch (12) which is switched on/off by means of the pressure supplied by the hydraulic pump (5) by the intermediate of a solenoid valve (13), said control system comprising a central unit (17), preferably of the microprocessor type, arranged to compare measured data with data pre-programmed in the central unit (17) so that, when the measurement data are in a pre-determined relationship to the pre-programmed limit-value ranges the central unit (17) is arranged to switch on/off the transmission of the front axle automatically, **characterized** in that means (14, 15, 16) are provided for constant measurement of the actual rear-axle speed, front axle-speed and travel speed of the tractor as well as a detector device (20) for observation of a braking process, said means and devices (14, 15, 16, 20) being arranged to feed the signals corresponding to the measured data to the central unit (17), in which unit limit-value ranges have been programmed in advance for the measured quantities, and in that based on the measured axle speeds, the central unit (17) is arranged to calculate the percentage ratio of the difference between the rear-axle speed and the front-axle speed to the measured rear-axle speed to compare said calculated ratio with a pre-programmed value or operation range as well as to compare the actual travel speed with a pre-programmed speed value, the central unit (17) being arranged to switch on the power transmission of the front axle when said percentage ratio exceeds the programmed value or operation range while the actual travel speed is, at the same time, lower than the programmed value of travel speed.

9. Control system as claimed in claim 8, **characterized** in that the control system further includes an operation switch device (18), by which the automatic control system can be switched on or, if necessary, by-passed.

10. Control system as claimed in claim 8 or 9, **characterized** in that the means (14, 15) for measurement of the axle speeds comprise speed detectors, and that the device (20) for detection of the braking process comprises a switch detector of the on-off type, said detectors being arranged to feed the signals corresponding to the measurement data to the central unit (17).

**Patentansprüche**

1. Verfahren zum automatischen Ein-/Ausschalten der Kraftübertragungseinrichtung einer Vorderradantriebsachse eines Traktors, der mit einem Kraftübertragungssystem versehen ist, welches eine Maschine (1), eine Kupplung (2), ein Getriebe (4), eine hydraulische Pumpe (5), eine mittels des Getriebes (4) mechanisch betätigte Hinterradantriebsachse und eine Kraftübertragungseinrichtung der Vorderachse umfaßt, die mittels einer hydraulischen Ankoppelung (12) ankoppelbar ist, wobei die hydraulische Ankoppelung eine hydraulisch betätigte Kupplung (12), die mittels des von der hydraulischen Pumpe (5) über ein Magnetventil (13) zugeführten Drucks ein-/ausgeschaltet wird, als auch eine Zentraleinheit (17) umfaßt, die zum Vergleichen der gemessenen Daten mit in der Zentraleinheit (17) vorprogrammierten Daten ausgebildet ist, so daß wenn die gemessenen Daten in einer vorbestimmten Beziehung zu den vorprogrammierten Grenzwertbereichen stehen, die Zentraleinheit (17) zum automatischen Ein-/Ausschalten der Kraftübertragungseinrichtung der Vorderachse ausgebildet ist, dadurch **gekennzeichnet**, daß die Geschwindigkeit der Hinterachse, die Geschwindigkeit der Vorderachse und die tatsächliche Bewegungsgeschwindigkeit des Traktors konstant gemessen werden und ein Bremsvorgang ermittelt wird, daß die gemessenen Werte und der Zeitpunkt des Bremsens mit in der Zentraleinheit (17) vorher programmierten Betriebswerten und -bereichen verglichen werden, und daß die Kraftübertragungseinrichtung der Vorderachse über die Mehrscheibenkupplung (12) mittels des Magnetventils (13) ausgeschaltet wird, wenn die tatsächliche Bewegungsgeschwindigkeit und die gemessene Hinterachsengeschwindigkeit für eine vorbestimmte Zeitspanne gleich sind, solange nicht gleichzeitig ein Bremsvorgang erfolgt.

2. Verfahren nach Anspruch 1, dadurch **gekennzeichnet**, daß von den gemessenen Achsgeschwindigkeiten das Prozentverhältnis des Unterschieds zwischen der Hinterachsengeschwindigkeit und der Vorderachsengeschwindigkeit zur gemessenen Hinterachsengeschwindigkeit errechnet wird, daß das errechnete Verhältnis mit einem vorprogrammierten Betriebsbereich verglichen wird, und daß die tatsächliche Bewegungsgeschwindigkeit mit einem vorprogrammierten Geschwindigkeitswert verglichen wird, wobei die Kraftübertragungseinrichtung der Vorderachse eingeschaltet wird, wenn das Prozentverhältnis den programmierten Betriebswert oder -bereich überschreitet, während die tatsächliche Bewegungsgeschwindigkeit gleichzeitig geringer als ein vorprogrammierter Wert der Bewegungsgeschwindigkeit ist.

3. Verfahren nach Anspruch 2, dadurch **gekennzeichnet**, daß die Kraftübertragungseinrichtung der Vorderachse eingeschaltet wird, wenn das Prozentverhältnis der Achsgeschwindigkeiten höher als der voreingestellte Wert ist, und wenn die tatsächliche Bewegungsgeschwindigkeit höchstens gleich dem voreingestellten Wert ist.

4. Verfahren nach Anspruch 1, dadurch **gekennzeichnet**, daß die Kraftübertragungseinrichtung der Vorderachse während des Bremsens eingeschaltet wird, wenn die gemessene Vorderachsengeschwindigkeit höher als 0 km/h liegt.

5. Verfahren nach einem der Ansprüche 1 bis 3, dadurch **gekennzeichnet**, daß die Kraftübertragungseinrichtung der Vorderachse abgeschaltet wird, wenn die tatsächliche Bewegungsgeschwindigkeit höher als ein voreingestellter Bewegungsgeschwindigkeitswert ist, wenn nicht gleichzeitig ein Bremsvorgang erfolgt.

6. Verfahren nach Anspruch 5, dadurch **gekennzeichnet**, daß die Kraftübertragungseinrichtung der Vorderachse abgeschaltet wird, wenn die tatsächliche Bewegungsgeschwindigkeit höher als ein voreingestellter Wert ist.

7. Verfahren nach Anspruch 1 oder 4,
dadurch **gekennzeichnet**,
daß die Kraftübertragungseinrichtung der Vorderachse beim Bremsen ausgeschaltet wird, wenn die gemessene Vorderachsengeschwindigkeit 0 km/h beträgt und die Bodengeschwindigkeit über 0 km/h liegt.

8. Steuerungssystem zum automatischen Ein-/Ausschalten der Kraftübertragungseinrichtung einer Vorderradantriebsachse eines Traktors, der mit einem Kraftübertragungssystem versehen ist, welches eine Maschine (1), eine Kupplung (2), ein Getriebe (4), eine hydraulische Pumpe (5) sowie eine mittels des Getriebes (4) mechanisch betriebene Hinterradantriebsachse und eine Kraftübertragungseinrichtung des Vorderrads umfaßt, die mittels einer hydraulischen Ankopplung (12) ankoppelbar ist, wobei die hydraulische Ankopplung eine hydraulisch betätigte Kupplung (12) umfaßt, die mittels des von der hydraulischen Pumpe (5) über ein Magnetventil (13) zugeführten Drucks ein-/ausschaltbar ist, wobei das Steuerungssystem eine Zentraleinheit (17), vorzugsweise des Mikroprozessortyps, umfaßt, die dazu vorgesehen ist, gemessene Daten mit in der Zentraleinheit (17) vorprogrammierten Daten zu vergleichen, so daß, wenn die gemessenen Daten in einer vorbestimmten Beziehung zu den vorprogrammierten Grenzwertbereichen stehen, die Zentraleinheit (17) zum automatischen Ein/Ausschalten der Kraftübertragungseinrichtung der Vorderachse ausgebildet ist,
dadurch **gekennzeichnet**,
daß Mittel (14,15,16) für eine konstante Messung der tatsächlichen Hinterachsengeschwindigkeit, Vorderachsengeschwindigkeit und Bewegungsgeschwindigkeit des Traktors als auch eine Detektoreinrichtung (20) für die Detektierung eines Bremsvorgangs vorgesehen sind, wobei die Mittel und Einrichtungen (14,15,16,20) ausgebildet sind, um die den gemessenen Daten entsprechenden Signale der Zentraleinheit (17) zuzuführen, in welcher Einheit vorher Grenzwertbereiche für die gemessenen Größen programmiert worden sind, und daß basierend auf den gemessenen Achsgeschwindigkeiten die Zentraleinheit (17) dazu ausgebildet ist, das Prozentverhältnis der Differenz zwischen der Hinterachsengeschwindigkeit und der Vorderachsengeschwindigkeit zu der gemessenen Hinterachsengeschwindigkeit zu errechnen, um dieses errechnete Verhältnis mit einem vorprogrammierten Wert oder Betriebsbereich zu vergleichen als auch um die aktuelle Bewegungsgeschwindigkeit mit einem vorprogrammierten Geschwindigkeitswert zu vergleichen, wobei die Zentraleinheit (17) dazu ausgebildet ist, die Kraftübertragungseinrichtung der Vorderachse einzuschalten, wenn das Prozentverhältnis den programmierten Wert oder Betriebsbereich übersteigt, während die tatsächliche Bewegungsgeschwindigkeit gleichzeitig geringer als der programmierte Wert der Bewegungsgeschwindigkeit ist.

9. Steuerungssystem nach Anspruch 8,
dadurch **gekennzeichnet**,
daß das Steuerungssystem weiterhin eine Betriebsartschalteinrichtung (18) umfaßt, durch die das automatische Steuerungssystem eingeschaltet oder, falls notwendig, überbrückt werden kann.

10. Steuerungssystem nach Anspruch 8 oder 9,
dadurch **gekennzeichnet**,
daß die Mittel (14,15) zur Messung der Achsgeschwindigkeiten Geschwindigkeitsdetektoren umfassen, und daß die Einrichtung (20) zur Detektierung des Bremsvorgangs einen Schaltdetektor des Ein/Aus-Typs umfaßt, wobei die Detektoren dazu ausgebildet sind, die den gemessenen Daten entsprechenden Signale der Zentraleinheit (17) zuzuführen.

**Revendications**

1. Procédé pour la mise en marche/hors marche automatique d'une transmission de force motrice à un essieu de traction avant d'un tracteur muni d'un système de transmission de force de motrice qui comprend un moteur (1), un embrayage (2), une boîte de vitesses (4), une pompe hydraulique (5), un essieu de traction arrière actionné mécaniquement au moyen de la boîte de vitesses (4), et une transmission de l'essieu avant à accoupler au moyen de l'accouplement hydraulique (12), cet accouplement hydraulique comprenant un embrayage actionné hydrauliquement (12) qui est mis en marche/hors marche au moyen de la pression amenée par la pompe hydraulique (5) par l'intermédiaire d'une électrovanne (13) ainsi qu'une unité centrale (17), apte à comparer les données mesurées avec les données programmées dans l'unité centrale (17) de sorte que lorsque les données de mesure sont en relation prédéterminée avec les plages de valeurs-limites préprogrammées, l'unité centrale (17) est apte à mettre automatiquement en marche/hors marche la transmission de l'essieu avant, **caractérisé en ce que** l'on mesure de façon constante la vitesse de l'essieu arrière, la vitesse de l'essieu avant et la vitesse de marche réelle du tracteur et l'on capte une opération de freinage, en ce que les valeurs mesurées et le moment du freinage sont comparés avec les valeurs et les plages de fonctionnement programmées à l'avance dans l'unité centrale (17), et en ce que la transmission de force motrice de l'essieu avant est mise hors marche par l'embrayage à disques multiples (12) par l'intermédiaire de l'électrovanne (13) si la vitesse de marche réelle et la vitesse d'essieu arrière mesurée sont égales pendant une durée prédéterminée, sauf si un freinage se produit en même temps.

2. Procédé selon la revendication 1, **caractérisé en ce qu'**à partir des vitesses d'essieu mesurées, on calcule le rapport en pourcentage de la différence entre la vitesse de l'essieu arrière et de la vitesse de l'essieu avant par rapport à la vitesse de l'essieu arrière mesurée, en ce que le rapport calculé est comparé avec une plage préprogrammée de fonctionnement, et en ce que la vitesse de marche réelle est comparée avec une valeur de vitesse préprogrammée, la transmission de force motrice de l'essieu avant étant mise en marche lorsque le rapport en pourcentage dépasse la valeur ou la plage de fonctionnement programmées tandis que la vitesse de marche réelle est, en même temps, inférieure à la valeur programmée de la vitesse de marche.

3. Procédé selon la revendication 2, **caractérisé en ce que** la transmission de force motrice de l'essieu avant est mise en marche lorsque le rapport en pourcentage des vitesses d'essieu est supérieur à la valeur préétablie et lorsque la vitesse de marche réelle est au maximum égale à la valeur préétablie.

4. Procédé selon la revendication 1, **caractérisé en ce que** la transmission de force motrice de l'essieu avant est mise en marche pendant le freinage si la vitesse d'essieu avant mesurée est supérieure à 0 km/h.

5. Procédé selon l'une quelconque des revendications 1 à 3, **caractérisé en ce que** la transmission de force motrice de l'essieu avant est mise hors marche si la vitesse de marche réelle est supérieure à une valeur préprogrammée de la vitesse de marche, sauf si un freinage se produit en même temps.

6. Procédé selon la revendication 5, **caractérisé en ce que** la transmission de force motrice de l'essieu avant est mise hors marche si la vitesse de marche réelle est supérieure à une valeur préétablie.

7. Procédé selon la revendication 1 ou 4, **caractérisé en ce que** la transmission de force motrice de l'essieu avant est mise hors marche lors du freinage si la vitesse d'essieu avant mesurée est de 0 km/h et la vitesse au sol est supérieure à 0 km/h.

8. Système de commande pour la mise en marche-/hors marche automatique de la transmission de force motrice d'un essieu de traction avant d'un tracteur muni d'un système de transmission de force motrice qui comprend un moteur (1), un embrayage (2), une boîte de vitesses (4), une pompe hydraulique (5) ainsi qu'un essieu de traction arrière mécaniquement actionné par la boîte de vitesses (4) et une transmission de l'essieu avant à accoupler au moyen d'un accouplement hydraulique (12), cet accouplement hydraulique comprenant un embrayage actionné hydrauliquement (12) qui est mis en marche/hors marche au moyen de la pression fournie par la pompe hydraulique (5) par l'intermédiaire d'une électrovanne (13), ce système de commande comprenant une unité centrale (17), de préférence du type microprocesseur, apte à comparer les valeurs mesurées avec les données préprogrammées dans l'unité centrale (17) de sorte que lorsque les données de mesure sont en relation prédéterminée per rapport aux plages de valeurs-limites préprogrammées, l'unité centrale (17) est apte à mettre en marche/hors marche la transmission de l'essieu avant automatiquement, **caractérisé en ce que** des moyens (14, 15, 16) sont prévus pour la mesure constante de la vitesse d'essieu arrière réelle, de la vitesse d'essieu avant et de la vitesse de marche du tracteur ainsi qu'un dispositif détecteur (20) pour l'observation de l'opération de freinage, ces moyens et dispositifs (14, 15, 16, 20) étant aptes à amener les signaux correspondants aux données mesurées à destination de l'unité centrale (17), dans laquelle les plages de valeurs-limites ont été programmées à l'avance pour les quantités mesurées et en ce qu'en fonction des vitesses d'essieu mesurées, l'unité centrale (17) est apte à calculer le rapport en pourcentage de la différence entre la vitesse de l'essieu arrière et la vitesse de l'essieu avant par rapport à la vitesse de l'essieu arrière mesurée pour comparer le rapport calculé avec une valeur ou une plage de fonctionnement préprogrammées ainsi que pour comparer la vitesse de marche réelle avec une valeur de vitesse préprogrammée, l'unité centrale (17) étant apte à mettre en marche la transmission de force motrice de l'essieu avant lorsque le rapport en pourcentage dépasse la valeur ou la plage de fonctionnement programmées tandis que la vitesse de marche réelle est en même temps inférieure à la valeur programmée de la vitesse de marche.

9. Système de commande selon la revendication 8, **caractérisé en ce que** le système de commande comprend de plus un dispositif de commutation de marche (18) grâce auquel le système de commande automatique peut être mis en marche ou au besoin contourné.

10. Système de commande selon la revendication 8 ou 9, **caractérisé en ce que** les moyens (14, 15) destinés à mesurer les vitesses d'essieu comprennent des détecteurs de vitesse et en ce que le dispositif (20) pour la détection de l'opération de freinage comprend un détecteur de commutation du type marche-arrêt, ces détecteurs étant aptes à amener les signaux correspondants aux données de mesure à destination de l'unité centrale (17).